# EUROPÄISCHE PATENTSCHRIFT

(11) **EP 1 182 374 B1**
(45) Veröffentlichungstag und Bekanntmachung des Hinweises auf die Patenterteilung: **04.01.2006**
(21) Anmeldenummer: 01113888.0
(22) Anmeldetag: 07.06.2001
(51) Int. Cl.: F16F 9/46

(54) **Regelbarer Schwingungsdämpfer für Kraftfahrzeuge und Verfahren zum Verstellen eines derartigen Schwingungsdämpfers**
Controllable shock absorber for vehicles and method for adjusting this shock absorber
Amortisseur réglable pour véhicules automobiles, et méthode de réglage d'un amortisseur

(30) Priorität: 18.08.2000 DE 10040518; 02.02.2001 DE 10104640
(43) Veröffentlichungstag der Anmeldung: 27.02.2002
(73) Patentinhaber: ThyssenKrupp Bilstein GmbH, 58256 Ennepetal (DE)
(72) Erfinder: Hamers, Wolfgang, Ing., 58256 Ennepetal (DE); von Oppenkowski, Frank, Ing., 48249 Dülmen (DE); Adamek, Jürgen, Dr., 58256 Ennepetal (DE); Feist, Dirk, 44627 Herne (DE); Saaddedin, Kais, Dipl.-Ing., 44866 Bochum (DE)

(56) Entgegenhaltungen:
- DE-C- 4 011 358
- DE-C- 19 650 152
- GB-A- 2 222 227
- US-A- 5 533 597

## Beschreibung

Die Erfindung betrifft regelbare Schwingungsdämpfer für Kraftfahrzeuge nach den Oberbegriffen der Patentansprüche 1 und 2 sowie ein Verfahren zum Verstellen eines derartigen Schwingungsdämpfers.

Um das Fahrverhalten eines Kraftfahrzeuges den gegebenen Fahr- und Straßenverhältnissen anpassen zu können, werden Schwingungsdämpfer regelbar ausgeführt. Dabei werden den Dämpfungsventilen im Dämpferkolben zusätzliche regelbare Bypassventile zugeordnet. Die Regelung erfolgt üblicherweise durch elektronische Regelprogramme, die nach den unterschiedlichen Messwerten, wie Fahrzeuggeschwindigkeit, Lenkradstellung und fahrdynamische Kennwerte, die Regelung der Schwingungsdämpfung vomehmen.

Aus der DE 40 11 358 C1 ist ein regelbarer Schwingungsdämpfer nach dem Oberbegriff des Anspruchs 1 bekannt. Die GB 2 222 227 A zeigt einen regelbaren Schwingungsdämpfer nach dem Oberbegriff des Anspruchs 2. Zum Verstellen eines Stellelements ist jeweils ein Motor vorgesehen. Dieser Motor dient dazu, ein Glockenelement bzw. einen Drehsteller gegenüber einer mit radialen Bohrungen versehenen Innenbohrung zu verdrehen oder axial zu verschieben.

Nachteilig sind für dieses Verdrehen oder Verschieben nicht nur große Verstellkräfte, sondern auch große Haltekräfte erforderlich, da, hervorgerufen durch die hohen Strömungsgeschwindigkeiten im Bypassventil, dieses bestrebt ist, sich in ungewünschter Weise zu verstellen, vorzugsweise selbst zu schließen. Dieser Effekt führt dazu, dass ein innerhalb des Schwingungsdämpfers angeordneter Motor oder ein entsprechender Magnet entweder aufgrund seiner Größe nicht räumlich integriert werden kann oder ein Ableiten der entstehenden Verlustwärme nicht oder nur schwer möglich ist. Von daher wird die Verstellung weiterhin bevorzugt außerhalb des eigentlichen Schwingungsdämpfers plaziert, was jedoch mit entsprechenden Problemen bei der Befestigung und auch bei der Verstellung verbunden ist.

Aus der DE 196 50152 C1 ist ein weiterer gattungsgemäßer regelbarer Schwingungsdämpfer bekannt. Bei diesem Schwingungsdämpfer wurde das Problem der benötigten großen Verstellkräfte und großen Haltekräfte dadurch gelöst, dass das Stellelement, hier ein Hubkolben, hydraulisch entlastet wurde.

Nachteilig bei dieser Ausbildung ist eine Vielzahl von Bauteilen für das Stellelement erforderlich. Des Weiteren wird ein aufwendiges Kanalsystem mit Rückschlagventilen benötigt, da zusätzliche Kanäle für die hydraulische Entlastung erforderlich sind.

Der Erfindung liegt die Aufgabe zugrunde, das Stellelement für den Schwingungsdämpfer derartig auszubilden, dass geringere Verstell- und/oder Haltekräfte aufgebracht werden müssen, wobei das Stellelement einfach aufgebaut sein soll.

Diese Aufgabe wird durch die Merkmale des Anspruchs 1 oder des Anspruchs 2 gelöst. Vorteilhafte Aus- und Weiterbildungen sind in den Ansprüchen 3 bis 13 beschrieben. Anspruch 14 beschreibt ein Verfahren zum Verstellen eines Schwingungsdämpfers nach den Ansprüchen 1 bis 13.

Die mit der Erfindung erzielten Vorteile bestehen insbesondere darin, dass mit einfachen Mitteln erreicht wird, dass die Verstell- und Haltekräfte für das Bypassventil gering gehalten werden. Dabei wird insbesondere vorteilhaft erreicht, dass bei hohen Druckdifferenzen eine große Selbsthaltungskraft im Ventil erzielt wird, die den großen induzierten Verstellkräften entgegenwirkt. Weiterhin vorteilhaft wird durch das Verfahren zum Verstellen des Schwingungsdämpfers erreicht, dass nur sehr geringe Verstellkräfte benötigt werden.

Ein Ausführungsbeispiel der Erfindung ist in der Zeichnung dargestellt und wird im Folgenden näher beschrieben. Es zeigen
- Fig. 1: einen Querschnitt durch den Dämpfungskolben einschließlich des Bypassventils,
- Fig. 2: eine vergrößerte Darstellung des Bypassventils,
- Fig. 3: einen um 90° versetzten Schnitt entsprechend Fig. 2,
- Fig. 4: einen Querschnitt gemäß Fig. 1 mit druckbeaufschlagten Kolbenventilen,
- Fig. 5: einen um 90° versetzten Schnitt zu Fig. 4, entsprechend Fig. 3,
- Fig. 6: einen Schnitt durch das Bypassventilgehäuse mit optimiertem Durchflussquerschnitt,
- Fig. 7: eine räumliche Darstellung des Gehäuses nach Fig. 6,
- Fig. 8: einen Querschnitt eines Ventils entsprechend Fig. 1 in anderer Bauweise und
- Fig. 9: ein einzelnes Regel- und Rückschlagventil für die Anordnung außerhalb des Dämpfungszylinders.

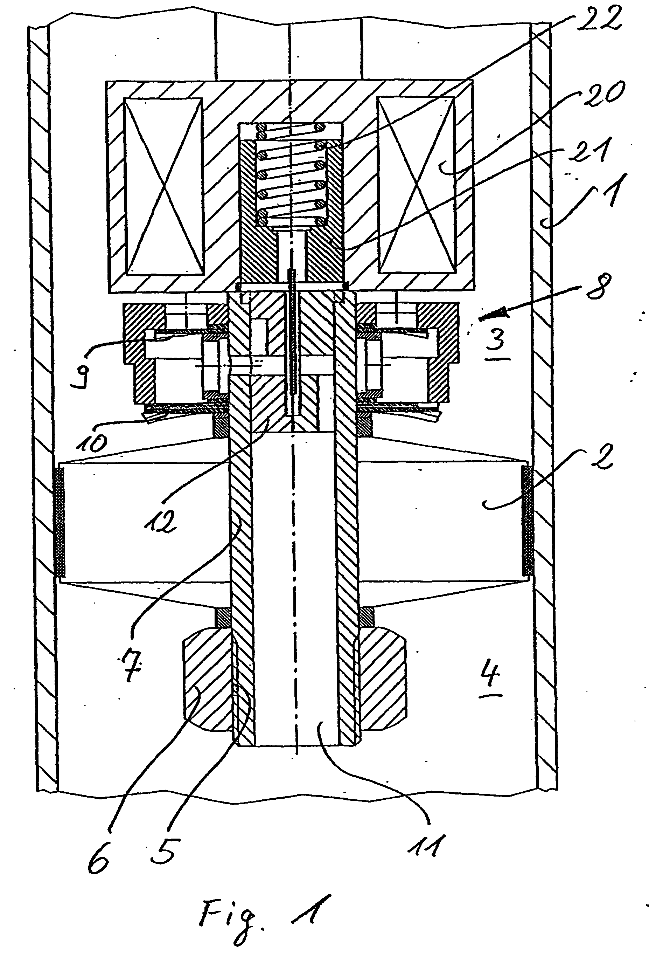

Wie in Fig. 1 dargestellt, weist der Stoßdämpfer einen Dämpfungszylinder 1 auf, dessen Innenraum durch einen Kolben 2 in zwei Arbeitsräume 3, 4 unterteilt wird. Der Kolben 2 ist in bekannter Weise mit nicht dargestellten Dämpfungsventilen versehen und ist über einen Gewindeabschnitt 5 und eine Mutter 6 mit der oszillierend in den Zylinder 1 eintauchenden Kolbenstange 7 verbunden.

Ein Bypassventil 8 ist oberhalb des Kolbens 2, wie im Ausführungsbeispiel gezeigt, oder auch unterhalb des Kolbens 2 an der Kolbenstange 7 befestigt. Dieses Bypassventil 8 ist wie der Kolben 2 mit als Tellerfedem ausgebildeten Rückschlagscheiben 9, 10 ausgebildet und bildet mit nachfolgend beschriebenen Kanälen eine Verbindung zum oberen Arbeitsraum 3.

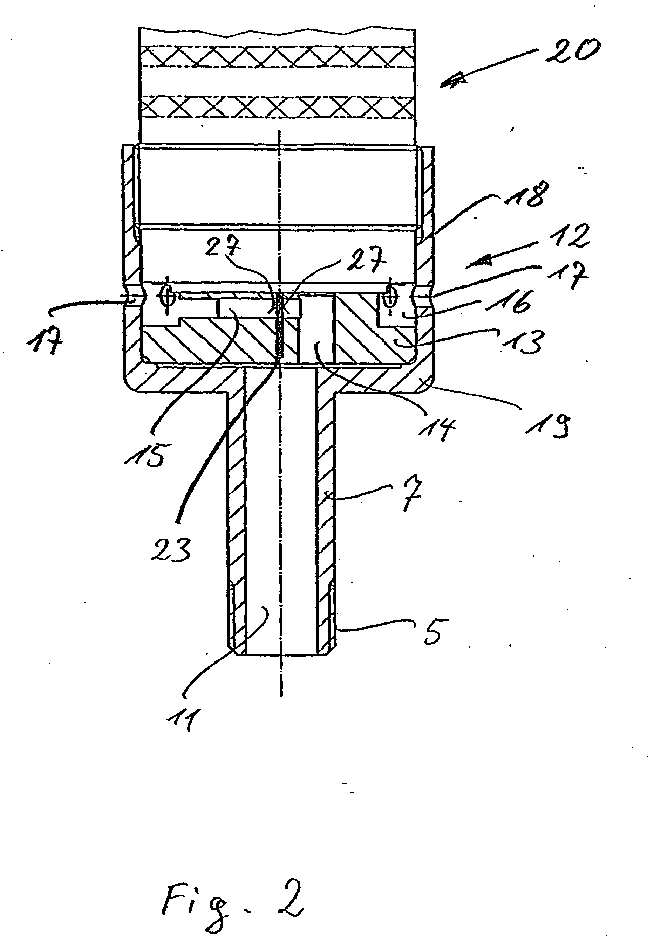

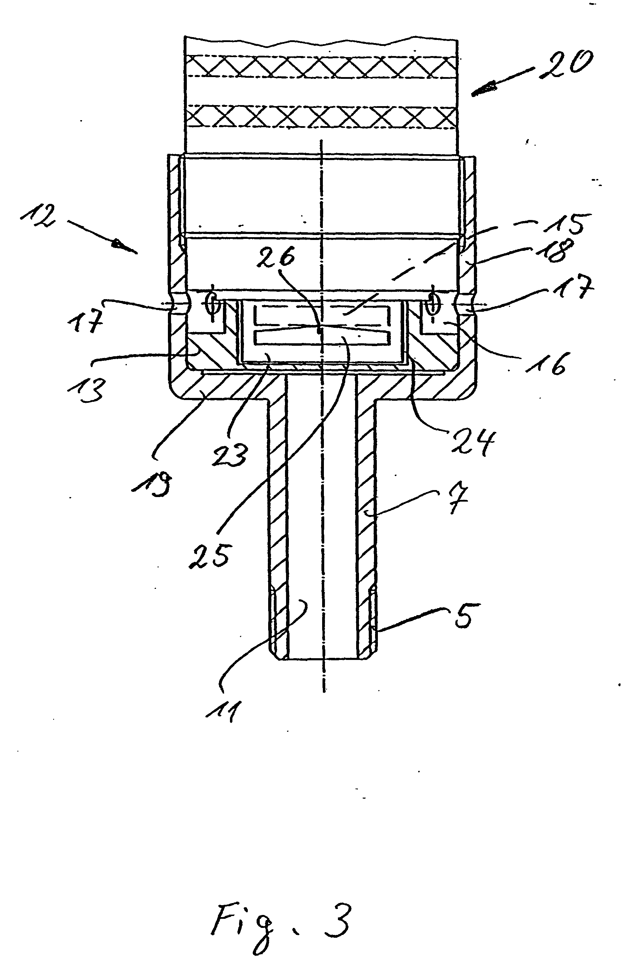

Die Kolbenstange 7 weist im unteren Bereich eine zentrale Bohrung 11 auf. Innerhalb dieser Bohrung 11 ist im oberen Bereich ein kontinuierlich verstellbares Bypassventil 12 angeordnet. In den Fig. 2 und 3 ist dieses Bypassventil 12 im Detail dargestellt. Es weist einen Ventilkörper 13 auf, der von Kanälen und Ringräumen durchdrungen ist. Diese Kanäle und Ringräume stellen eine Verbindung zwischen den beiden Arbeitsräumen 3 und 4 dar. Entgegen der Ausbildung gemäß Fig. 1 ist das Bypassventil 12 nach den Fig. 2 und 3 nicht innerhalb der Bohrung 11 der Kolbenstange 7, sondern oberhalb dieser Bohrung 11 in einem erweiterten Topfraum angeordnet. Die Bypasskanäle sind zusammengesetzt aus einem hydraulisch an die Bohrung 11 in der Kolbenstange 7 angeschlossenen Einlaufkanal 14, einem sich quer hierzu anschließenden Steuerkanal 15 und einem Ringkanal 16, der über Bohrungen 17 durch den Mantel 18 des Haltetopfes 19 für das Bypassventil hydraulisch mit dem oberen Arbeitsraum 3 verbunden ist.

Oberhalb des Bypassventils 12 ist ein Elektromagnet 20 mit einem Anker 21, der gegen die Kraft einer Wendelfeder 22 kontinuierlich verstellbar ist, angeordnet. Dieser Anker 21 dient als Stellelement und trägt einen plattenförmig ausgebildeten Flachschieber 23. Der Flachschieber 23 erstreckt sich quer zum Steuerkanal 15 und wird umlaufend in einem Schlitz 24 geführt. Im Ausführungsbeispiel ist der Flachschieber 23 als Federzunge ausgebildet. Der Flachschieber 23 weist einen dachartigen Durchbruch 25 auf. In geschlossener Stellung des Bypassventils 12 liegt dieser Durchbruch 25 unterhalb des Steuerkanals 15, sodass der Durchfluss durch den Steuerkanal 15 gesperrt ist. Durch die dachförmige Ausbildung des Durchbruchs 25 wird eine fein dosierte Öffnung des Bypassventils 12 ermöglicht, da anfangs der Steuerkanal 15 lediglich über die Spitze 26 des Durchbruchs 25 angesteuert wird. Andere Formen für den Steuerkanal 15 und den Durchbruch 25 wird der Fachmann entsprechend den Erfordernissen wählen. Die volle Öffnung des Bypassventils 12 ist erreicht, wenn der Durchbruch 25 in seiner Gänze vor dem Gesamtquerschnitt des Steuerkanals 15 liegt.

Wie ohne weiteres aus den Fig. 1 und 2 erkennbar ist, führt eine hohe Druckdifferenz im Dämpfungsmedium zwischen den Arbeitsräumen 3 und 4 zu einem Anlegen des Flachschiebers 23 mit seinen Flachseiten 27 an die zugehörigen Anlageflächen des Schlitzes 24. Das bedingt eine Selbstsperrung der Lage des Flachschiebers 23, sodass so gut wie keine Haltekräfte vom Elektromagneten 20 aufgebracht werden müssen.

Sobald ein Druckausgleich zwischen den Arbeitsräumen 3 und 4 erfolgt ist, also in erster Linie am Umkehrpunkt der Bewegung der Kolbenstange 7, wird diese Selbsthemmung aufgehoben. Der Flachschieber 23 ist im Schlitz 24 ohne große Krafteinleitung verstellbar und leichtgängig. Da bei einem Schwingungsdämpfer für Kraftfahrzeuge der obere und untere Bewegungsumkehrpunkt der Kolbenstange 7 sehr häufig auftritt, ist, auch wenn nur zu diesen Zeitpunkten eine Verstellung erfolgt, eine feinfühlige Regelung möglich. Die Regelung des Steuerschiebers kann somit in verschiedener Weise durchgeführt werden. Zum einen kann der Elektromagnet 20 mit geringem Strom angesteuert werden. Das führt dazu, dass bei Druckdifferenz zwischen den Arbeitsräumen 3 und 4 die Sperrkräfte am Flachschieber 23 so hoch werden, dass die Magnetkraft nicht ausreicht, den Flachschieber 23 zu verstellen. Eine Verstellung erfolgt dann stets beim Durchlaufen des Bewegungsumkehrpunktes der Kolbenstange 7. Alternativ kann die Steuerung auch so ausgelegt werden, dass die Verstellung bewusst nur beim Durchlaufen der Bewegungsumkehrpunkte der Kolbenstange 7 erfolgt.

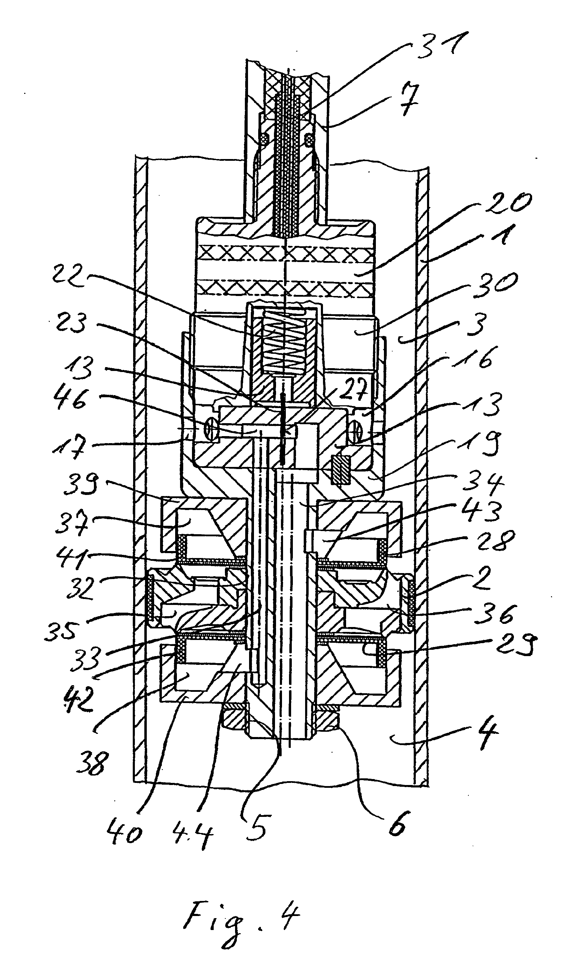

Auch in Fig. 4 weist der Stoßdämpfer einen Dämpfungszylinder 1 auf, dessen Innenraum durch einen Kolben 2 in zwei Arbeitsräume 3, 4 unterteilt wird. Der Kolben 2 ist in bekannter Weise mit Dämpfungsventilen 28, 29 versehen und ist über einen Gewindeabschnitt 5 und eine Mutter 6 über ein Steuergehäuse 30 und einen Haltetopf 19 mit der oszillierend in den Dämpfungszylinder 1 eintauchenden Kolbenstange 7 verbunden. Das Steuergehäuse 30 trägt im Wesentlichen einen Elektromagneten 20 mit einem Anker 21, der gegen die Kraft einer Wendelfeder 22 kontinuierlich bzw. in Stufen verstellbar ist. Der Elektromagnet 20 ist mit der Kolbenstange 7 verschraubt, wobei die Kolbenstange 7 hohl ausgebildet ist, um die elektrischen Anschlussleitungen 31 aufnehmen zu können. Elektromagnet 20 und Steuergehäuse 30 können, wie im Ausführungsbeispiel, als ein Bauteil ausgebildet sein.

An seinem unteren Ende ist das Steuergehäuse 30 mit einem Außengewinde versehen, auf das der Haltetopf 19 aufgeschraubt wird. Das untere Ende des Haltetopfes 19 ist mit einem Aufnahmezapfen 32 zur Aufnahme des Kolbens 2 sowie weiterer Bauteile, die noch näher beschrieben werden, ausgebildet. Des Weiteren verlaufen achsparallel durch den Aufnahmezapfen 32 wenigstens zwei zu einem Kanalsystem gehörende Bohrungen 33, 34.

An durch den Kolben 2 verlaufende Durchtrittskanäle 35, 36, die von den Dämpfungsventilen 28, 29 abgedeckt werden, grenzen außenseitig Druckräume 37, 38 an. Diese Druckräume 37, 38 werden durch Druckraumgehäuse 39, 40 und gegenüber diesen beweglichen, auf den Dämpfungsventilen 28, 29 aufliegenden Dichtungen 41, 42 gebildet. Druckkammergehäuse 39, 40, Dichtungen 41, 42, Dämpfungsventile 28, 29 und Kolben 2 liegen den Aufnahmezapfen 32 umfassend auf diesem und werden über die Mutter 6 mit ihm verschraubt. Radiale Durchtritte 43, 44 durch die Druckraumgehäuse 39, 40 und die Wandung des Aufnahmezapfens 32 verbinden die Druckräume 37, 38 mit den Bohrungen 33, 34.

Im Topfbereich des Haltetopfes 19 ist ein Steuerventil mit einem Ventilkörper 13 angeordnet. In diesem Ventilkörper 13 setzen sich die Bohrungen 33, 34 fort. Ein Querkanal 46 verbindet die Bohrungen 33, 34 miteinander und mit einem Ringkanal 16, der wiederum über Bohrungen 17 mit dem oberen Arbeitsraum 3 hydraulisch verbunden ist.

Am Anker 21 des Elektromagneten 20 ist - wie auch aus Fig. 2 ersichtlich - ein plattenförmig ausgebildeter Flachschieber 23 angebracht. Der Flachschieber 23 erstreckt sich quer zum Querkanal 46 räumlich zwischen dem Auslauf der Bohrungen 33 und 34 und wird umlaufend in einem Schlitz 24 geführt.

Bei geschlossenem Steuerventil, wie dieses in den Fig. 1 und 2 gezeigt ist, sind die Druckräume 37, 38 hydraulisch mit den gegenüberliegenden Arbeitsräumen 4, 3 verbunden. Der Druckraum 38 ist über den Durchtritt 44, die Bohrung 33, den Querkanal 46, den Ringkanal 16 und Bohrungen 17 mit dem Arbeitsraum 3 verbunden. Der Druckraum 37 ist über den Durchtritt 43 und die Bohrung 34 mit dem Arbeitsraum 4 verbunden. Dadurch wird eine Druckunterstützung der Dämpfungsventile 28, 29 über die Druckräume 37, 38 erreicht. Mit Öffnung bzw. teilweiser Öffnung des Steuerventils ergibt sich zum einen ein Bypass zwischen den Arbeitsräumen 3 und 4 über die Bohrung 34, den Querkanal 46, den Ringkanal 16 und die Bohrungen 17. Zum anderen ergibt sich eine Druckreduzierung in den Druckräumen 37 und 38.

Im Ausführungsbeispiel ist der Flachschieber 23 als Federzunge ausgebildet. Der Flachschieber 23 weist einen dachartigen Durchbruch 25 auf. In geschlossener Stellung des Steuerventils liegt dieser Durchbruch 25 unterhalb des Querkanals 46, sodass der Durchfluss durch den Querkanal 46 gesperrt ist. Durch die dachförmige Ausbildung des Durchbruchs 25 wird eine fein dosierte Öffnung des Steuerventils ermöglicht, da anfangs der Querkanal 46 lediglich über die Spitze 26 des Durchbruchs 25 angesteuert wird. Andere Formen für den Querkanal 46 und den Durchbruch 25 wird der Fachmann entsprechend den Erfordernissen wählen. Die volle Öffnung des Steuerventils ist erreicht, wenn der Durchbruch 25 in seiner Gänze vor dem Gesamtquerschnitt des Querkanals 46 liegt.

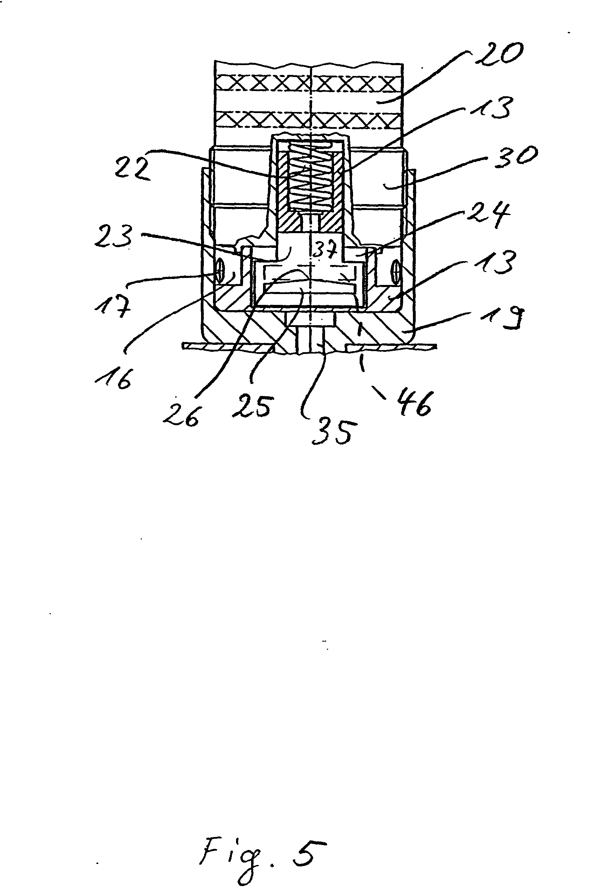

Die Ausführungen zur Selbsthemmung und Verstellung des Flachschiebers 23 zu den Fig. 2 und 3 gelten in gleicher Weise auch für die Ausbildung nach den Fig. 4 und 5.

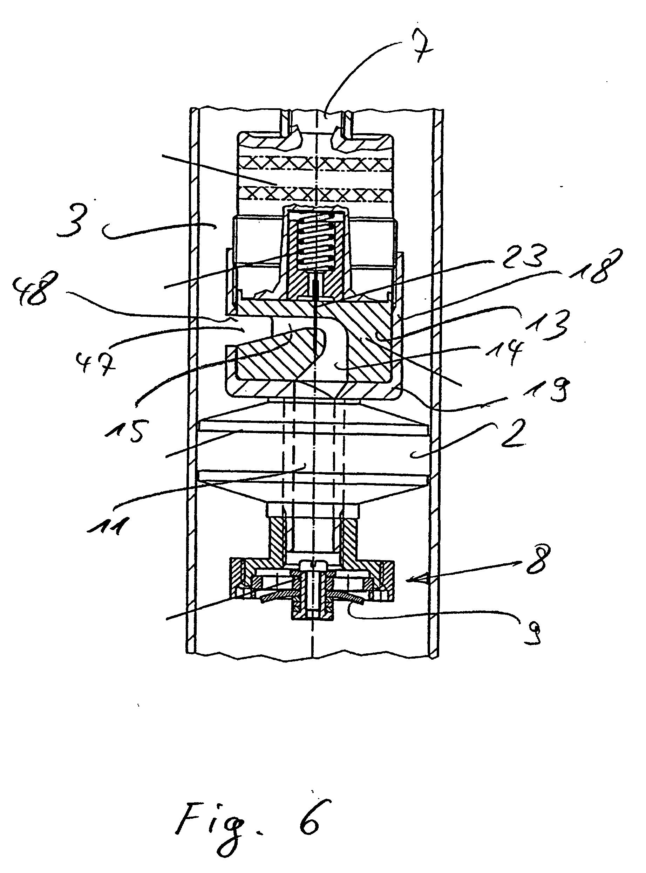

Fig. 6 zeigt ein Kolbensystem entsprechend Fig. 1. Das Bypassventil 8 ist hier unterhalb des Kolbens 2 angeordnet und dient gleichzeitig zum Verschrauben des Kolbens 2.

Das Bypassventil 8 ist als so genanntes Komfortventil ausgebildet und wirkt nur in Zugrichtung. Von daher ist er auch nur mit einer Rückschlagscheibe 9 versehen. Das Komfortventil kann aber auch in Zug- und in Druckrichtung wirken. Auch der Einsatz eines doppelt degressiven Ventils ist möglich.

Der Durchströmkanal durch den Ventilkörper 13 wurde strömungsoptimiert. Der dem oberen Arbeitsraum 3 zugewandte Teil des Steuerkanals 15 verläuft etwa auf einer rechtwinklig zur Kolbenstangenachse stehenden Ebene. Er erweitert sich, ausgehend vom Flachschieber 23, sowohl in der Höhe als auch in der Breite. Dieser Teil des Steuerkanals 15 endet in einem Umfangsabschnitt 47. Der Mantel 18 des Haltetopfes 19 ist mit einem entsprechenden Ausschnitt 48 ausgebildet.

Der in die Bohrung 11 mündende Teil des Steuerkanals 15 geht kontinuierlich in den Einlaufkanal 14 über. Er erweitert sich ebenfalls räumlich, ausgehend vom Flachschieber 23, und ist so gekrümmt, dass er etwa im Zentrum der Unterfläche des Ventilkörpers 13 endet und hier an die Bohrung 11 anschließt.

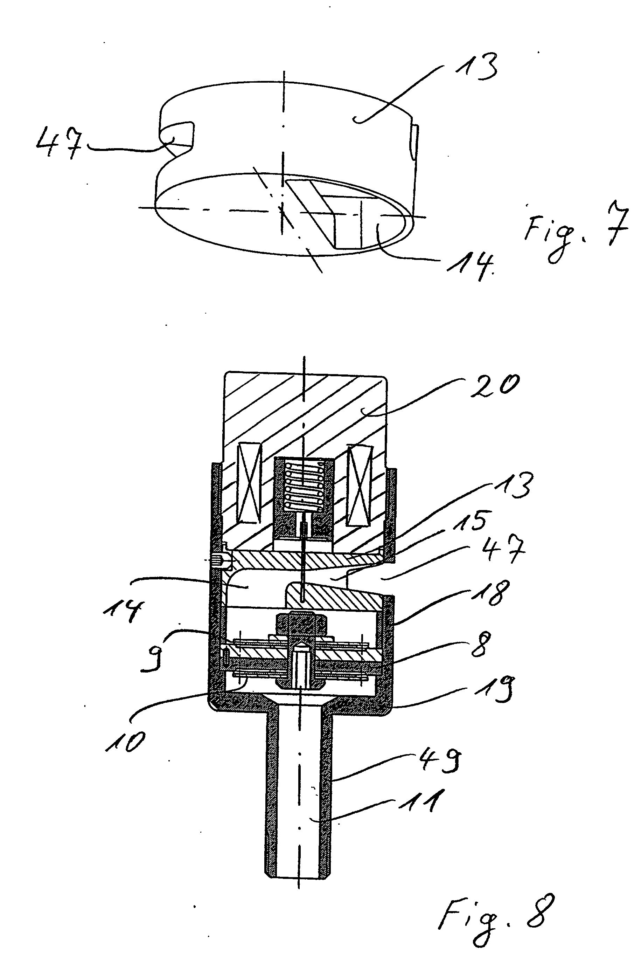

Fig. 7 zeigt eine räumliche Darstellung des Ventilkörpers 13 entsprechend Fig. 6.

In Fig. 8 ist eine weitere alternative Ausbildung eines Ventilsystems gemäß Fig. 1 dar gestellt. Die Darstellung beschränkt sich jedoch auf die Ausbildung des Steuerventils in Verbindung mit dem Bypasskolben und dem Haltetopf.

Bei der Ausbildung des Ventilsystems nach Fig. 8 trägt und hält der Haltetopf 19 sowohl das Bypassventil 8 als auch den Ventilkörper 13. Beide Bauteile sind im Mantel 18 des Haltetopfes 19 angebracht und gehalten. Der Mantel 18 wird über ein Innengewinde auf den Elektromagneten 20 aufgeschraubt. Steuerkanal 15 und Einlaufkanal 14 sind ähnlich ausgebildet wie in den Fig. 6 und 7, nur dass bei dieser Ausbildung der Einlaufkanal nicht etwa zentrisch an der Unterseite des Ventilkörpers 13 enden muss. Das Bypassventil 8 trägt, wie auch in Fig. 1, zwei Rückschlagscheiben 9 und 10 mit entsprechenden Dämpfungsfunktionen. Eine zentrische Bohrung 11 durchdringt den zapfenförmigen Tragbolzen 49 des Haltetopfes 19. Auf diesen Tragbolzen 49 wird der in Fig. 8 nicht dargestellte Kolben 2 aufgebracht und mittels einer Mutter 6 verschraubt.

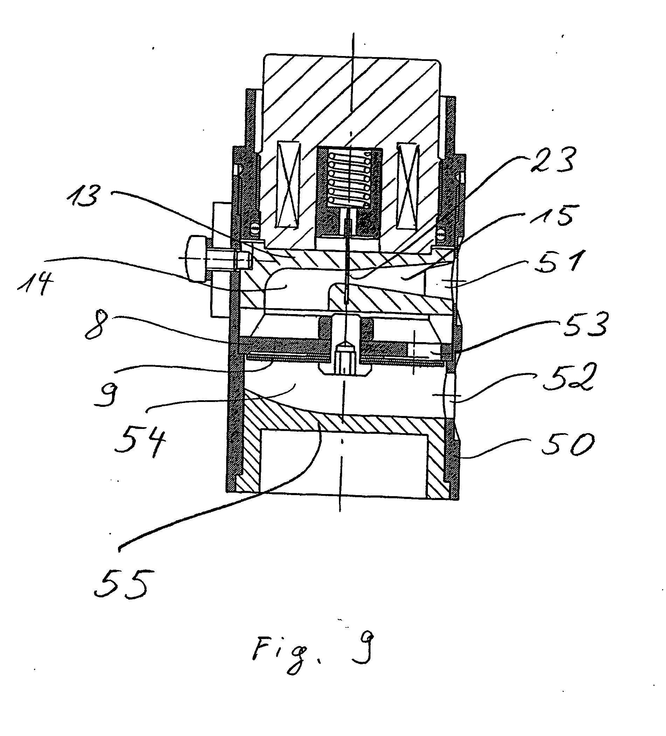

In Fig. 9 wird ein einzelnes Regel- und Rückschlagventil dargestellt, das in einem separaten topfförmigen Gehäuse 50 untergebracht ist. Derartige Regel- und Rückschlagventile werden zum Steuem von Bypasswegen dann bei regelbaren Schwingungsdämpfern eingesetzt, wenn Bauraum oder Bauhöhe des Schwingungsdämpfers nicht ausreichend groß sind. Derartige Regel- und Rückschlagventile werden dann von außen am Dämpfungszylinder 1 angebracht. Steuerkanäle durchdringen den Dämpfungszylinder 1 und sind mit den Steuereingängen 51, 52 des separaten Regel- und Rückschlagventils verbunden. Das Regel- und Rückschlagventil gemäß Fig. 9 entspricht vom Aufbau dem Ventil nach Fig. 8. Es ist jedoch entsprechend Fig. 6 nur mit einer Rückschlagscheibe 9 am Bypassventil 8 ausgerüstet. An den Steuereingang 51 schließt sich direkt der Steuerkanal 15 an. Der Einlaufkanal 14 endet oberhalb des Bypassventils 8 im Ausführungsbeispiel dezentral an der Unterseite des Ventilkörpers 13. An den Einlaufkanal 14 schließt sich hydraulisch das Bypassventil 8 an. Bei Überdruck im Steuereingang 51 und mehr oder minder geöffnetem Flachschieber 23 hebt die Rückschlagscheibe 9 von der Durchgangsbohrung 53 des Bypassventils 8 ab und öffnet die hydraulische Verbindung zum Hydraulikraum 54. Über den Steuereingang 52 ist das Regel- und Rückschlagventil dann wieder mit dem entsprechend zu beaufschlagenden Hydraulikbereich des regelbaren Schwingungsdämpfers verbunden. Durch die dargestellte Formoptimierung des Bodens 55 kann der Strömungswiderstand weiter reduziert werden.

Von den Regel- und Rückschlagventilen entsprechend Fig. 9 können auch zwei oder mehr von außen am Dämpfungszylinder eines regelbaren Schwingungsdämpfers angebracht sein. Es ist auch möglich, dass die Bauteile von mehreren Regel- und Rückschlagventilen in einem Gehäuse 50 angeordnet und entsprechend den Erfordernissen hydraulisch miteinander verbunden sind.

### Bezugszeichenliste

- 1.: Dämpfungszylinder
- 2.: Kolben
- 3.: Arbeitsraum
- 4.: Arbeitsraum
- 5.: Gewindeabschnitt
- 6.: Mutter
- 7.: Kolbenstange
- 8.: Bypassventil
- 9.: Rückschlagscheibe
- 10.: Rückschlagscheibe
- 11.: Bohrung
- 12.: Bypassventil
- 13.: Ventilkörper
- 14.: Einlaufkanal
- 15.: Steuerkanal
- 16.: Ringkanal
- 17.: Bohrung
- 18.: Mantel
- 19.: Haltetopf
- 20.: Elektromagnet
- 21.: Anker
- 22.: Wendelfeder
- 23.: Flachschieber
- 24.: Schlitz
- 25.: Durchbruch
- 26.: Spitze
- 27.: Flachseite
- 28.: Dämpfungsventil
- 29.: Dämpfungsventil
- 30.: Steuergehäuse
- 31.: Anschlussleitungen
- 32.: Aufnahmezapfen
- 33.: Bohrung
- 34.: Bohrung
- 35.: Durchtrittskanal
- 36.: Durchtrittskanal
- 37.: Druckraum
- 38.: Druckraum
- 39.: Druckraumgehäuse
- 40.: Druckraumgehäuse
- 41.: Dichtung
- 42.: Dichtung
- 43.: Durchtritt
- 44.: Durchtritt
- 45.: Steuerventil
- 46.: Querkanal
- 47.: Umfangsabschnitt
- 48.: Ausschnitt
- 49.: Tragbolzen
- 50.: Gehäuse
- 51.: Steuereingang
- 52.: Steuereingang
- 53.: Durchgangsbohrung
- 54.: Hydraulikraum
- 55.: Boden

## Patentansprüche

1. Regelbarer hydraulischer Schwingungsdämpfer für Kraftfahrzeuge, bestehend aus einem mit Dämpfungsflüssigkeit gefüllten Dämpfungszylinder (1), in welchen ein mit Dämpfungsventilen versehener und mit einer Kolbenstange (7) verbundener Kolben (2) oszillierend eintaucht und den Zylinderinnenraum in zwei Arbeitsräume (3, 4) unterteilt und der wenigstens eine die Arbeitsräume (3, 4) miteinander verbindende Bypassverbindung aufweist, welche durch ein als Flachschieber (23) plattenförmig mit einem oder mehreren Durchbrüchen (25) ausgebildetes Stellelement querschnittsveränderbar ist, wobei das Stellelement über einen Motor oder einen Magneten vorzugsweise kontinuierlich verstellbar ist, **dadurch gekennzeichnet, dass** der Flachschieber (23) als Linearschieber, verschiebbar in der Richtung der Kolbenbewegung ausgebildet, seitlich vorzugsweise in einem Schlitz (24) geführt ist und beidseitig jeweils an der Flachseite (27) über Kanäle (14, 15, 16) mit der Dämpfungsflüssigkeit jeweils eines der Arbeitsräume (3, 4) beaufschlagt wird.

2. Regelbarer hydraulischer Schwingungsdämpfer für Kraftfahrzeuge mit einem in einem Dämpfungszylinder (1) axial verschieblich geführten und mit einer Kolbenstange (7) verbundenen Kolben (2), wobei der Kolben (2) druckabhängige Dämpfungsventile (28, 29) für einen Austausch von Dämpfungsflüssigkeit in der Zug- und in der Druckstufe aufweist und den Dämpfungszylinder (1) in zwei Arbeitsräume (3, 4) unterteilt, und bei dem Durchtrittskanäle (35, 36) vorhanden sind, durch welche das die Dämpfungsventile (28, 29) beaufschlagende Druckmedium strömt, und bei dem auf der den Durchtrittskanälen (35, 36) abgewandten Seite des Dämpfungsventils (28, 29) ein mit dem jeweils gegenüberliegenden Arbeitsraum (4, 3) mittels eines Kanalsystems verbundener Druckraum (37, 38) vorhanden ist, über den ein Steuerdruck auf das jeweilige Dämpfungsventil (28, 29) ausgeübt wird, wobei das Kanalsystem mittels eines verschieblich geführten, elektromagnetisch betätigten Stellelements drosselbar ist, welches als Flachschieber (23) plattenförmig mit einem oder mehreren Durchbrüchen (25) ausgebildet ist, **dadurch gekennzeichnet, dass** der Flachschieber (23) als Linearschieber, verschiebbar in der Richtung der Kolbenbewegung ausgebildet, seitlich vorzugsweise in einem Schlitz (24) geführt ist und beidseitig jeweils an der Flachseite (27) über Kanäle (33, 34, 43, 44, 16, 17, 46) mit der Dämpfungsflüssigkeit jeweils eines der Arbeitsräume (3, 4) beaufschlagt wird bzw. mit einem der Druckräume (37, 38) verbunden ist.

3. Schwingungsdämpfer nach Anspruch 1 oder Anspruch 2, **dadurch gekennzeichnet, dass** der Kolben (2) auf einem, das Kanalsystem und/oder das Stellelement aufweisenden, an die Kolbenstange (7) angebundenen, mit einem Aufnahmezapfen (32) ausgebildeten Haltetopf (19) angeordnet ist.

4. Schwingungsdämpfer nach einem oder mehreren der Ansprüche 1 bis 3, **dadurch gekennzeichnet, dass** der Flachschieber (23) elastisch am Stellteil des Motors oder des Magnets angebunden ist.

5. Schwingungsdämpfer nach einem oder mehreren der Ansprüche 1 bis 4, **dadurch gekennzeichnet, dass** der Flachschieber (23) als Federzunge ausgebildet ist.

6. Schwingungsdämpfer nach einem oder mehreren der Ansprüche 1 bis 5, **dadurch gekennzeichnet, dass** der Durchbruch (25) durch den Flachschieber (23) sich in Verstellrichtung kontinuierlich oder diskontinuierlich erweitert.

7. Schwingungsdämpfer nach einem oder mehreren der Ansprüche 1 bis 6, **dadurch gekennzeichnet, dass** in der dem Stellelement zugeordneten Bypassverbindung ein oder mehrere vor, nach oder parallel geschaltete federbelastete Ventile angeordnet sind.

8. Schwingungsdämpfer nach einem oder mehreren der Ansprüche 1 bis 7, **dadurch gekennzeichnet, dass** die Kanäle (14, 15, 46) durch den Ventilkörper (13) eine strömungsgünstige Form aufweisen.

9. Schwingungsdämpfer nach Anspruch 8, **dadurch gekennzeichnet, dass** die Kanäle (14, 15, 46) sich beiseitig vom Flachschieber (23) beginnend stetig erweitern.

10. Schwingungsdämpfer nach Anspruch 8 oder 9, **dadurch gekennzeichnet, dass** sich einer der Kanäle (15, 46) in Wesentlichen auf einer zur Kolbenstangenachse senkrechten Ebene erstreckt.

11. Schwingungsdämpfer nach einem oder mehreren der Ansprüche 1 und 4 bis 10, **dadurch gekennzeichnet, dass** zwei Bypassverbindungen jeweils mit einem entgegengesetzten Rückschlagventil und einem Stellelement zwischen den Arbeitsräumen (3, 4) angeordnet sind.

12. Schwingungsdämpfer nach Anspruch 11, **dadurch gekennzeichnet, dass** die Bypassverbindungen außerhalb des Dämpfungszylinders (1) angeordnet sind.

13. Schwingungsdämpfer nach Anspruch 11 oder 12, **dadurch gekennzeichnet, dass** ein oder beide Rückschlagventile und Stellventile jeweils in einem separaten Gehäuse (50) angeordnet sind.

14. Verfahren zum Verstellen eines Schwingungsdämpfers nach den Ansprüchen 1 bis 13, **dadurch gekennzeichnet, dass** die Verstellbewegung des Flachschiebers (23) in oder nahe dem Bewegungstodpunkt des Kolbens (2) erfolgt.

## Claims

1. Controllable hydraulic vibration damper for motor vehicles, consisting of a damping cylinder (1) which is filled with damping fluid and into which a piston (2) which is provided with damping valves and is connected to a piston rod (7) is received in an oscillating manner and subdivides the inner cylinder chamber into two working chambers (3, 4) and which comprises at least one bypass connection which connects the working chambers (3, 4) together and whose cross-section can be varied by means of an actuating element which is formed as a flat slide (23) in the form of a plate having one or several openings (25), wherein the actuating element is preferably continuously adjustable by means of a motor or a magnet, **characterised in that** the flat slide (23) is formed as a linear slide so as to be displaceable in the direction of the piston movement, is guided laterally preferably in a slot (24) and is influenced on both sides respectively on the flat side (27) with the damping fluid from a respective one of the working chambers (3, 4) via channels (14,15,16).

2. Controllable hydraulic vibration damper for motor vehicles having a piston (2) which is guided in an axially displaceable manner in a damping cylinder (1) and is connected to a piston rod (7), wherein the piston (2) comprises pressure-dependent damping valves (28, 29) for an exchange of damping fluid in the traction and compression stage and subdivides the damping cylinder (1) into two working chambers (3, 4), and in which through-channels (35, 36) are provided, through which pressure medium flows which influences the damping valves (28, 29), and in which on the side of the damping valve (28, 29) remote from the through-channels (35, 36) there is provided a pressure chamber (37, 38) which is connected to the respectively opposite-lying working chamber (4, 3) by means of a channel system and which serves to exert a control pressure upon the respective damping valve (28, 29), wherein the channel system can be restricted by means of a displaceably guided, electromagnetically actuated actuating element which is formed as a flat slide (23) in the form of a plate having one or several openings (25), **characterised in that** the flat slide (23) is formed as a linear slide so as to be displaceable in the direction of the piston movement, is guided laterally preferably in a slot (24) and is influenced on both sides respectively on the flat side (27) with the damping fluid from a respective one of the working chambers (3, 4) via channels (33, 34, 43, 44, 16, 17, 46) or is connected to one of the pressure chambers (37, 38).

3. Vibration damper as claimed in claim 1 or claim 2, **characterised in that** the piston (2) is disposed on a holding vessel (19) which comprises the channel system and/or the actuating element, is connected to the piston rod (7) and is formed with a locating pin - (32).

4. Vibration damper as claimed in any one or several of claims 1 to 3, **characterised in that** the flat slide (23) is elastically connected to the adjusting part of the motor or of the magnet.

5. Vibration damper as claimed in any one or several of claims 1 to 4, **characterised in that** the flat slide (23) is formed as a resilient tab.

6. Vibration damper as claimed in any one or several of claims 1 to 5, **characterised in that** the opening (25) through the flat slide (23) widens continuously or discontinuously in the adjusting direction.

7. Vibration damper as claimed in any one or several of claims 1 to 6, **characterised in that** the bypass connection which is allocated to the actuating element is provided with one or several spring-loaded valves which are connected upstream, downstream or in parallel.

8. Vibration damper as claimed in any one or several of claims 1 to 7, **characterised in that** the channels (14, 15, 46) through the valve body (13) comprise a shape which is favourable to the flow.

9. Vibration damper as claimed in claim 8, **characterised in that** the channels (14, 15, 46) widen constantly on both sides beginning from the flat slide (23).

10. Vibration damper as claimed in claim 8 or 9, **characterised in that** one of the channels (15, 46) extends substantially on a plane which is perpendicular to the piston rod axis.

11. Vibration damper as claimed in any one or several of claims 1 and 4 to 10, **characterised in that** two bypass connections in each case having an opposed non-return valve and an actuating element are disposed between the working chambers (3, 4).

12. Vibration damper as claimed in claim 11, **characterised in that** the bypass connections are disposed outside the damping cylinder (1).

13. Vibration damper as claimed in claim 11 or 12, **characterised in that** one or both non-return valves and control valves are disposed in each case in a separate housing (50).

14. Method of adjusting a vibration damper as claimed in claims 1 to 13, **characterised in that** the adjustment movement of the flat slide (23) is performed at or in close proximity to the movement dead centre of the piston (2).

## Revendications

1. Amortisseur hydraulique réglable pour véhicules à moteur, constitué d'un cylindre d'amortissement (1) rempli de fluide d'amortissement, dans lequel plonge de manière oscillante un piston (2) pourvu de soupapes d'amortissement et relié à une tige de piston (7), qui divise l'espace interne du cylindre en deux chambres de travail (3, 4), et présente au moins une dérivation reliant entre elles les chambres de travail (3, 4), dont la section transversale peut être modifiée par un élément de réglage en forme de plaque, comme un tiroir plat (23), avec une ou plusieurs lumières (25), l'élément de réglage étant ajustable, de préférence en continu, à l'intervention d'un moteur ou d'un aimant, **caractérisé en ce que** le tiroir plat (23) réalisé comme un tiroir linéaire, mobile dans la direction de déplacement du piston, est guidé latéralement de préférence dans une fente (24) et est sollicité de part et d'autre, chaque fois sur le côté plat (27), par le fluide d'amortissement de l'une des chambres de travail (3, 4), par l'intermédiaire de canaux (14, 15, 16).

2. Amortisseur hydraulique réglable pour véhicules à moteur, avec un piston (2) guidé à coulissement axial dans un cylindre d'amortissement (1) et relié à une tige de piston (7), le piston (2) présentant des soupapes d'amortissement (28, 29) sollicitées par la pression, pour un échange de fluide d'amortissement dans les courses de traction et de compression, et divisant le cylindre d'amortissement (1) en deux chambres de travail (3, 4), et dans lequel sont prévus des canaux de passage (35, 36) par lesquels s'écoule le milieu sous pression sollicitant les soupapes d'amortissement (28, 29), et dans lequel est prévue, du côté de 1a soupape d'amortissement (28, 29) opposé aux canaux de passage (35, 36), une chambre de pression (37, 38) reliée par un système de canaux à la chambre de travail (4, 3) chaque fois opposée, par laquelle une pression de commande s'exerce sur la soupape d'amortissement (28, 29) correspondante, le système de canaux pouvant être étranglé par un élément de réglage guidé à coulissement, actionné électromagnétiquement, lequel est réalisé en forme de plaque, comme un tiroir plat (23) avec une ou plusieurs lumières (25), **caractérisé en ce que** le tiroir plat (23) est réalisé sous la forme d'un tiroir linéaire, mobile dans la direction de déplacement du piston, est guidé de préférence latéralement dans une fente (24) et est commandé de part et d'autre, chaque fois sur le côté plat (27) par des canaux (33, 34, 43, 44, 16, 17, 46), par le fluide d'amortissement d'une chambre de travail (3, 4) correspondante, ou est relié à l'une des chambres de pression (37, 38).

3. Amortisseur selon la revendication 1 ou la revendication 2, **caractérisé en ce que** le piston (2) est agencé sur un godet de retenue (19) réalisé avec une broche de réception (32), relié à la tige de piston (7), présentant le système de canaux et/ou l'élément de réglage.

4. Amortisseur selon l'une ou plusieurs des revendications 1 à 3, **caractérisé en ce que** le tiroir plat (23) est relié élastiquement à la partie de réglage du moteur ou de l'aimant.

5. Amortisseur selon l'une ou plusieurs des revendications 1 à 4, **caractérisé en ce que** le tiroir plat (23) est réalisé comme une languette élastique.

6. Amortisseur selon l'une ou plusieurs des revendications 1 à 5, **caractérisé en ce que** la lumière (25) dans le tiroir plat (23) s'élargit de manière continue ou discontinue dans la direction de réglage.

7. Amortisseur selon l'une ou plusieurs des revendications 1 à 6, **caractérisé en ce qu'**une ou plusieurs soupapes chargées par ressort, montées en amont, en aval ou en parallèle, sont disposées dans la dérivation associée à l'élément de réglage.

8. Amortisseur selon l'une ou plusieurs des revendications 1 à 7, **caractérisé en ce que** les canaux (14, 15, 46) traversant le corps de soupape (13) présentent une forme favorable à l'écoulement.

9. Amortisseur selon la revendication 8, **caractérisé en ce que** les canaux (14, 15, 46) s'élargissent en continu de part et d'autre, à partir du tiroir plat (23).

10. Amortisseur selon la revendication 8 ou 9, **caractérisé en ce que** l'un des canaux (15, 46) s'étend dans un plan sensiblement perpendiculaire à l'axe de la tige de piston.

11. Amortisseur selon l'une ou plusieurs des revendications 1 et 4 à 10, **caractérisé en ce que** deux dérivations, avec chaque fois une soupape anti-retour opposée et un élément de réglage, sont disposées entre les chambres de travail (3, 4).

12. Amortisseur selon la revendication 11, **caractérisé en ce** les dérivations sont disposées à l'extérieur du cylindre d'amortissement (1).

13. Amortisseur selon la revendication 11 ou 12, **caractérisé en ce** la ou les deux soupapes anti-retour et soupapes de réglage sont chaque fois disposées dans un logement (50) séparé.

14. Procédé de réglage d'un amortisseur selon les revendications 1 à 13, **caractérisé en ce que** le déplacement de réglage du tiroir plat (23) intervient au point mort du piston (2), ou au voisinage de celui-ci.
